# DEMANDE DE BREVET EUROPEEN

(11) **EP 1 350 702 A1**
(43) Date de publication de la demande: **08.10.2003**
(21) Numéro de dépôt: 03005519.8
(22) Date de dépôt: 11.03.2003
(51) Int. Cl.: B60T 11/228, B60T 11/232

(54) **Maitre-cylindre à bruit de fonctionnement reduit**

(30) Priorité: 21.03.2002 FR 0203585
(71) Demandeur: ROBERT BOSCH GmbH, 70442 Stuttgart (DE)
(72) Inventeur: Dreo, Jean-Yves, 6000 Fouquenies (FR); Nehr, Christophe, 60560 Hanvoile (FR); Pietsch, Christophe, 78360 Montesson (FR); Nen, Yannick, 94210 La Varenne St. Hilaire (FR); Sprocq, Raynald, 77360 Vaires Sur Marne (FR); Brahmi, Omar, 95270 Saint Martin Du Tertre (FR); Pagot, Henry, 93430 Villetaneuse (FR)
(74) Mandataire: Hurwic, Aleksander Wiktor

(57) **Abrégé**

La présente invention a principalement pour objet un maître-cylindre comportant un corps d'axe longitudinal (X) percé d'un alésage d'axe (X), au moins un piston (10) monté à coulissement étanche dans un alésage, le piston (10) comportant une tête de piston (32) et une queue de piston (34) raccordée à la tête de piston (32) par un épaulement (36), ladite queue de piston (34) étant guidée par une bague de guidage (38) montée fixe dans le corps de piston, la tête de piston (32) venant au repos en appui contre une bague d'appui (42) par l'intermédiaire de l'épaulement (36), ledit piston (10) délimite une chambre de travail (16) susceptible de contenir un liquide de frein sous pression et en communication avec des freins et une chambre d'alimentation (14) mise en communication au repos avec ladite chambre de travail par un dispositif à clapet 18) disposé dans le corps du piston (10), un canal d'alimentation (24) comportant une première extrémité longitudinale (37) raccordée de manière étanche à un réservoir de liquide de frein et une seconde extrémité longitudinale (39) opposée à la première extrémité (37) en regard de la bague d'appui (42) et permettant l'alimentation en liquide de frein de la chambre d'alimentation (14) par un canal de ré-alimentation (44) et des moyens d'amortissement hydraulique (48) du retour en appui de la tête de piston contre la bague d'appui (42) caractérisé en ce que ces moyens d'amortissement hydraulique (48) comportent un moyen obturateur (51) de manière sensiblement étanche de la seconde extrémité longitudinale du canal d'alimentation (24) et au moins un canal d'échappement (50) à débit réduit du liquide de frein de la chambre d'alimentation (14) vers le canal d'alimentation (24).

La présente invention s'applique notamment à l'industrie automobile.

La présente invention s'applique notamment à l'industrie du freinage pour véhicule automobile et notamment à l'industrie du freinage pour voiture particulière.

## Description

La présente invention se rapporte principalement à un maître-cylindre, notamment un maître-cylindre tandem à bruit de fonctionnement réduit, en particulier en fin de phase de freinage et système de freinage comportant un tel maître-cylindre.

Les maîtres-cylindres de type connu comportent un corps percé d'un alésage dans lequel est monté à coulissement étanche au moins un piston lié à un organe de commande, le piston divisant l'alésage en une chambre d'alimentation alimentée par un réservoir de liquide de frein au moyen d'un canal d'alimentation pratiqué dans le corps du maître-cylindre et en une chambre de travail en communication avec des freins situés au niveau de roues. Le piston comporte dans sa partie centrale un passage de communication entre la chambre d'alimentation et la chambre de travail, muni d'un clapet ouvert au repos et obturant le passage entre la chambre d'alimentation et la chambre de travail en phase de freinage. Le piston comporte également une tête de piston orientée vers la chambre de travail et une queue de piston recevant l'organe de commande du maître-cylindre, la queue de piston se raccordant à la tête de piston par un épaulement s'étendant radialement vers l'extérieur et formant une surface d'appui du piston au repos contre une bague d'appui, la bague d'appui entourant la queue de piston.

A la fin d'une phase de freinage, le piston sous l'action d'un ressort de rappel disposé dans la chambre de travail est repoussé en direction de l'organe de commande et vient frapper la bague d'appui, provoquant un bruit gênant pour le conducteur qui peut éventuellement craindre un mauvais fonctionnement de son système de freinage. Simultanément, le liquide de frein s'écoule de la chambre d'alimentation vers le réservoir entre le corps du maître-cylindre et la bague d'appui.

Ce problème de bruit apparaît particulièrement pour les systèmes de freinage électro-hydrauliques comportant un maître-cylindre actionné par un organe de commande, muni de moyens de simulation de sensation de pédale et servant en fonctionnement normal à simuler la réaction du circuit de freinage, et un calculateur détectant le déplacement de l'organe de commande et générant un signal commandant à une pompe hydraulique d'envoyer un certain volume de liquide de frein aux freins. En effet, les systèmes électro-hydrauliques sont plus sensibles à ce bruit, puisque contrairement aux systèmes de freinage classiques, ils ne comportent pas de servomoteur d'assistance pneumatique au freinage, disposé entre la pédale de frein et le maître-cylindre et qui en fin de freinage ralentit le retour du piston du maître-cylindre et donc atténue le bruit. De plus dans le cas d'un maître-cylindre tandem, c'est en particulier le piston du circuit hydraulique primaire qui est responsable de ce bruit.

Afin de réduire ce bruit, il a été proposé par exemple de recouvrir la bague d'appui avec un élastomère afin d'amortir le choc du piston contre la rondelle. Cependant, cette solution n'est pas entièrement satisfaisante.

Le brevet français non publié FR 01/13 073 propose comme solution de disposer dans le canal d'alimentation un réducteur de débit ralentissant l'écoulement du liquide de frein de la chambre d'alimentation vers le réservoir lors du retour du piston et formant ainsi un amortisseur hydraulique. Cependant, cette solution a un prix de revient élevé puisqu'il s'agit d'une pièce supplémentaire De plus, la mise en place de ce réducteur dans le canal d'alimentation risque de provoquer des pollutions éventuelles susceptibles de perturber le fonctionnement du maître-cylindre par exemple l'étanchéité du coulissement du maître-cylindre dans l'alésage.

C'est par conséquent un but de la présente invention d'offrir un maître-cylindre à bruit de fonctionnement réduit à un faible prix de revient.

C'est également un but de la présente invention d'offrir un maître-cylindre à faible bruit de fonctionnement dont le montage est simple.

Ces buts sont atteints par un maître-cylindre comportant au moins un piston coulissant de manière étanche dans une chambre et en appui au repos contre une bague d'appui, une chambre de travail et une chambre d'alimentation séparées par le piston, la chambre d'alimentation étant alimentée par à un réservoir de liquide de frein par l'intermédiaire d'un canal d'alimentation, le maître-cylindre comportant également un moyen obturateur de manière sensiblement étanche d'une seconde extrémité longitudinale du canal d'alimentation opposée à une première extrémité du canal d'alimentation raccordée de manière étanche au réservoir, le moyen obturateur empêchant l'écoulement du liquide de frein entre le canal et la chambre d'alimentation par la seconde extrémité longitudinale et comportant au moins un canal d'échappement du liquide frein de la chambre d'alimentation vers le canal d'alimentation à débit réduit.

En d'autres termes, le moyen obturateur qui par exemple est formé, par la bague d'appui, oblige le liquide de frein lors du retour du piston à s'écouler de la chambre d'alimentation vers le canal d'alimentation par les canaux d'échappement à débit réduit, ralentissant en fin de course la vitesse du piston en contact contre la bague d'appui.

L'invention a principalement pour objet un maître-cylindre comportant un corps d'axe longitudinal percé d'un alésage d'axe au moins un piston monté à coulissement étanche dans ledit alésage, le piston comportant une tête de piston et une queue de piston raccordée à la tête de piston par un épaulement, ladite queue de piston étant guidée par une bague de guidage montée fixe dans le corps de piston, la tête de piston venant au repos en appui contre une bague d'appui par l'intermédiaire de l'épaulement, ledit piston délimite une chambre de travail susceptible de contenir un liquide de frein sous pression et en communication avec des freins et une chambre d'alimentation mise en communication au repos avec ladite chambre de travail par un dispositif à clapet disposé dans le corps du piston, un canal d'alimentation comportant une première extrémité longitudinale raccordée de manière étanche à un réservoir de liquide de frein et une seconde extrémité longitudinale opposée à la première extrémité en regard de la bague d'appui et permettant l'alimentation en liquide de frein de la chambre d'alimentation par un canal de ré-alimentation et des moyens d'amortissement hydraulique du retour en appui de la tête de piston contre la bague d'appui caractérisé en ce que ces moyens d'amortissement hydraulique comportent un moyen obturateur de manière sensiblement étanche de la seconde extrémité longitudinale du canal d'alimentation et au moins un canal d'échappement à débit réduit du liquide de frein de la chambre d'alimentation vers le canal d'alimentation.

L'invention a également pour objet un maître-cylindre caractérisé en ce que ledit moyen obturateur est formé par une face de la bague d'appui.

L'invention a également pour objet un maître-cylindre caractérisé en ce que les moyens d'amortissement comportent un dégagement longitudinal pratiqué sur la périphérie extérieure de la tête de piston et en ce que ledit dégagement s'étend sur la périphérie extérieure de la tête de piston à partir de l'épaulement pratiqué sur le piston sur une distance au moins égale à la longueur séparant une face de la bague d'appui susceptible d'être en contact avec le piston et le canal de ré-alimentation.

L'invention a également pour objet un maître-cylindre caractérisé en ce que le dégagement est formé par au moins un méplat.

L'invention a également pour objet un maître-cylindre caractérisé en ce que le piston comporte deux méplats radialement opposés.

L'invention a également pour objet un maître-cylindre caractérisé en ce que la profondeur du méplat est compris entre 0,1mm et 1mm.

L'invention a également pour objet un maître-cylindre caractérisé en ce que le dégagement est formé par au moins un canal longitudinal.

L'invention a également pour objet un maître-cylindre caractérisé en ce que le dégagement est formé de cinq canaux longitudinaux répartis angulairement de manière uniforme sur une portion de la périphérie de la tête de piston.

L'invention a également pour objet un maître-cylindre caractérisé en ce que le dégagement est formé de deux ensembles de cinq canaux radialement opposés.

L'invention a également pour objet un maître-cylindre caractérisé en ce que le dégagement est formé par un variation du diamètre d'une portion de la tête de piston.

L'invention a également pour objet un maître-cylindre caractérisé en ce que le dégagement comporte au moins deux sections de diamètre croissant en direction de l'extrémité de la tête de piston opposée à l'extrémité longitudinale de la tête de piston reliée à la queue de piston.

L'invention a également pour objet un maître-cylindre caractérisé en ce que les moyens d'amortissement hydraulique comportent un canal sensiblement radial reliant la chambre d'alimentation et la périphérie extérieure de la tête de piston, ledit canal débouchant sensiblement en regard du canal de ré-alimentation lorsque que le piston est en appui contre la bague d'appui.

L'invention a également pour objet un maître-cylindre caractérisé en ce que le canal débouche dans une cuvette pratiquée sur la périphérie extérieure du piston.

L'invention a également pour objet un maître-cylindre caractérisé en ce que les moyens d'amortissement comportent un canal d'échappement disposé selon l'axe longitudinal entre la chambre d'alimentation et le canal d'alimentation, pratiqué sensiblement perpendiculairement à l'axe du maître-cylindre entre le canal de ré-alimentation et le moyen obturateur et de diamètre sensiblement plus petit que le diamètre du canal de ré-alimentation.

L'invention a également pour objet un maître-cylindre caractérisé en ce que le diamètre du canal d'échappement est compris entre 0,1mm et 1mm, et en ce que le diamètre du canal de ré-alimentation est compris entre 2mm et 4mm.

L'invention a également pour objet un maître-cylindre caractérisé en ce que ledit canal d'échappement est pratiqué dans le corps du maître-cylindre et dont une partie est formée par l'obturateur.

L'invention a également pour objet un maître-cylindre caractérisé en ce que les moyens d'amortissement comportent un canal formé par une rainure radiale pratiquée sur une face de la bague d'appui en contact au repos avec le piston en regard de la seconde extrémité longitudinale du canal d'alimentation.

L'invention a également pour objet un maître-cylindre précédentes caractérisé en ce qu 'il comporte des seconds moyens d'amortissement hydrauliques disposés entre la chambre de travail et la chambre d'alimentation.

L'invention a également pour objet un maître-cylindre caractérisé en ce que les seconds moyens d'amortissement hydrauliques sont formés d'un pièce obturatrice comportant un canal en regard de l'alésage de communication entre la chambre d'alimentation et la chambre de travail, lesdits seconds moyens étant disposés dans le tête de piston en avant du dispositif à clapet.

L'invention a également pour objet un maître-cylindre caractérisé en ce que ladite pièce obturatrice forme une pièce d'appui pour un ressort de rappel du clapet de maître-cylindre.

L'invention a également pour objet un maître-cylindre caractérisé en ce que le canal est formé par deux cônes relié par leur sommet d'axe longitudinale.

L'invention a également pour objet un maître-cylindre caractérisé en qu'il est relié en fonctionnement normal à des moyens de simulations de la réaction d'un circuit de freinage, et en fonctionnement dégradé à des freins de roues.

L'invention a également pour objet un système de freinage comportant un maître-cylindre selon la présente invention.

L'invention a principalement pour objet un système de freinage électro-hydraulique comportant un organe de freinage du type de celui d'une pédale de frein, des moyens de détection du déplacement de ladite pédale de frein, un calculateur élaborant une consigne de contrôle pour une pompe hydraulique délivrant du liquide de frein à au moins un frein disposé au niveau d'une roue du véhicule suite à la détection par les moyens de détection d'une action du conducteur sur l'organe de freinage caractérisé en ce qu'il comporte également un maître-cylindre selon la présente invention.

La présente invention sera mieux comprise à l'aide de la description suivante et des dessins annexés pour lesquels l'avant et l'arrière correspondent respectivement à la gauche et à la droite des dessins et sur lesquels :
- La figure 1A est une vue en coupe longitudinale d'un maître-cylindre comportant des moyens d'amortissement hydrauliques de type connu;
- La figure 1B est une vue de détail de la figure 1A ;
- Les figures 2A à 2C sont des vues de détail en coupe longitudinale d'un premier exemple de réalisation d'un premier mode de réalisation d'un maître-cylindre selon la présente invention représenté respectivement suivant des positions successives du piston primaire, en phase de freinage, en fin de freinage et au repos ;
- Les figures 3A à 3C sont des vues de détail en coupe longitudinale d'un deuxième exemple du premier mode de réalisation d'un maître-cylindre selon la présente invention représenté respectivement suivant des positions successives du piston primaire, en phase de freinage, en fin de freinage et au repos ;
- La figure 4 est une vue de détail en coupe longitudinale d'un exemple d'un second mode de réalisation d'un maître-cylindre selon la présente invention ;
- Les figures 5A à 5C sont des vues de détail en coupe longitudinale d'un premier exemple d'un troisième mode de réalisation d'un maître-cylindre selon la présente invention respectivement suivant des positions successives du piston primaire, en phase de freinage, en fin de freinage et au repos ;
- La figure 6 est une vue en coupe transversale d'un piston du maître-cylindre des figures 5A à 5C ;
- La figure 7 est une vue de détail en coupe longitudinale d'un second exemple du troisième mode de réalisation d'un maître-cylindre selon la présente invention ;
- La figure 8 est une vue en coupe transversale d'un piston d'un troisième exemple du troisième mode de réalisation d'un maître-cylindre selon la présente invention ;
- Les figures 9A, 9B et 9C sont des vues de détail en coupe longitudinale d'un quatrième mode de réalisation d'un maître-cylindre selon la présente invention représenté respectivement suivant des positions successives du piston primaire, en phase de freinage, en fin de freinage et au repos ;
- La figure 10 est une vue de détail en coupe longitudinale d'un cinquième mode de réalisation d'un maître-cylindre selon la présente invention.

Les mêmes références seront utilisés pour désigner dans les maître-cylindre selon la présente invention les éléments ayant sensiblement la même forme et sensiblement la même fonction.

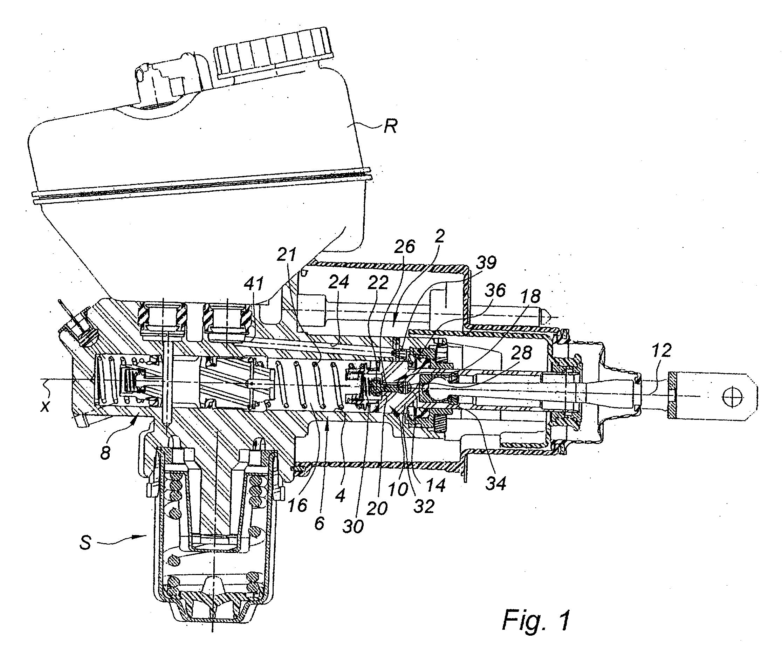

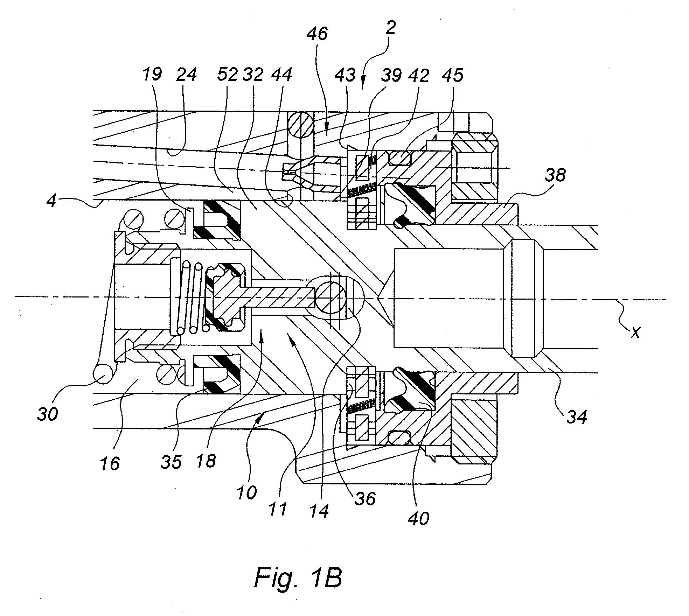

Sur la figure 1 on peut voir un maître-cylindre de type connu pour un système de freinage électro-hydraulique comportant un corps 2 d'axe longitudinal X comportant un alésage 4 divisé en un circuit primaire 6 et un circuit secondaire 8. Les circuits primaire et secondaire 6,8 sont de structures sensiblement équivalentes, ainsi nous ne décrirons que le circuit primaire. Le circuit primaire 6 comporte un piston 10 monté à coulissement étanche dans l'alésage 4, le piston 10 étant actionné par un organe de commande, par exemple une tige d'actionnement 12 reliée à une pédale de frein (non représenté). Le circuit primaire 6 comporte également une chambre d'alimentation 14 située à l'arrière du piston hydraulique 10 et orientée vers la tige d'actionnement 12 relativement au piston 10 dans l'alésage 4 et une chambre de travail 16 disposée à l'avant du piston hydraulique 10 dans l'alésage 4. La chambre de travail 16 et la chambre d'alimentation 14 sont mises en communication par un système de clapet 18 disposé sensiblement dans la partie centrale du piston 10. Le clapet 18 comporte un siège de clapet 20 bordant un canal traversant longitudinalement le piston 10 et un obturateur 22 en position levée au repos par rapport au siège de clapet 20 et mettant en communication la chambre d'alimentation et la chambre de travail. Un ressort de rappel 21 du piston 10 est monté en compression dans la chambre de travail 16 en appui contre le piston 10.

Lors d'une phase de freinage le clapet 18 est fermé et permet la montée en pression de la chambre de travail par l'avancée du piston 10 dans la chambre de travail. La chambre d'alimentation 14 est reliée à un réservoir de liquide de frein R par des moyens de communication étanches formés en partie par un canal d'alimentation 24 pratiqué dans la partie supérieure du corps du maître-cylindre. L'obturateur 22 comporte une tige 26 venant en appui au repos contre une pièce d'appui 28, par exemple une goupille montée sensiblement perpendiculairement à l'axe X dans la chambre d'alimentation. Un moyen de rappel 30 disposé en avant de l'obturateur, permet la fermeture du clapet en phase de freinage.

Le piston primaire 10 comporte vers l'avant une tête de piston 32 et une queue de piston 34 orientée vers l'arrière et se raccordant à la tête de piston par un épaulement 36. Des moyens d'étanchéité 35, par exemple un joint à lèvre entourant la tête de piston 32 du piston 10 en contact avec la surface interne de l'alésage 4 et assure l'étanchéité entre la chambre de travail 16 et la chambre d'alimentation 14. Le piston 10 est guidé en translation de manière étanche par une bague de guidage 38 entourant la queue de piston 34, le coulissement étanche est réalisé par des moyens d'étanchéité 40 par exemple des joints à lèvre maintenus par la bague de guidage, elle-même montée de manière étanche dans le corps du maître-cylindre par des moyens d'étanchéité par exemple des joints toriques. La position au repos du piston primaire 10 est définie par une butée formée par une bague d'appui 42 coopérant avec l'épaulement 36 formé sur la périphérie extérieure du piston 10 et montée en appui entre la bague de guidage 38 et le corps du maître-cylindre sans obturer une première extrémité 39 sensiblement longitudinale du canal d'alimentation 24, opposée à une seconde extrémité 37 orientée vers le réservoir, par exemple la bague d'appui 42 est en appui sur un épaulement 43 formé dans le corps du maître-cylindre de manière à ménager un passage entre la bague d'appui 42 et le corps du maître-cylindre entre le canal d'alimentation 24 et la chambre d'alimentation 14 (figure 1b). Le corps du maître-cylindre comporte également un canal de ré-alimentation 44 pratiqué sensiblement perpendiculairement à l'axe X entre l'alésage 4 et le canal d'alimentation 24.

Le maître-cylindre comporte également des moyens de simulation S de la sensation pédale formés par une cartouche comportant des moyens élastiques reproduisant la réaction d'u circuit de freinage classique. L'intérieur de la cartouche est mise en communication avec la chambre de travail 16 en fonctionnement normal. En fonctionnement dégradé, par exemple lorsque le calculateur ou la pompe est hors service, la chambre de travail 16 est directement en communication avec les freins et envoie du liquide de frein sous pression dans les freins.

Le circuit secondaire comporte également une chambre de travail alimentant en fonctionnement dégradé des freins distincts de ceux alimentés par la chambre de travail 16 du circuit primaire. Cependant en fonctionnement normal, la chambre de travail secondaire est isolée à la fois des freins et de la cartouche de simulation de la sensation pédale.

Le maître-cylindre comporte également un moyen d'amortissement hydraulique formé par un manchon 46 disposé dans le canal d'alimentation 24 en avant de la bague d'appui 42 et réduisant localement le diamètre du canal d'alimentation 24 et donc la vitesse d'écoulement du liquide de frein entre la chambre d'alimentation et la chambre de travail.

Nous allons maintenant décrire succinctement le retour du piston hydraulique primaire 10 en position repos en butée contre la bague d'appui afin d'expliquer le fonctionnement des moyens amortisseurs de bruit de type connu.

En fin de phase de freinage le conducteur relâche son action sur la pédale de frein, le piston primaire 10 recule, en direction de la tige d'actionnement 12, sous l'action du ressort 21 et se rapproche de la bague d'appui 42. Le liquide frein s'écoule alors de la chambre d'alimentation 14 vers le réservoir R par le canal d'alimentation 24 entre la bague d'appui 42 et le corps du maître-cylindre à la première extrémité longitudinale 39 du canal d'alimentation 24. Du fait de la présence du réducteur de débit 46 disposé dans le canal d'alimentation 24, la vitesse d'écoulement du liquide de frein en direction du réservoir est réduite ce qui ralentit le retour du piston et amortit le choc entre le piston et la bague ce qui réduit le bruit.

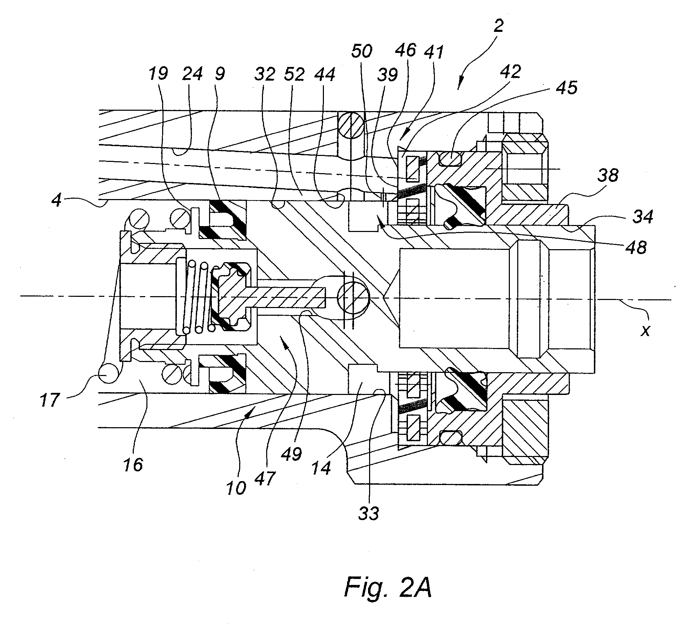

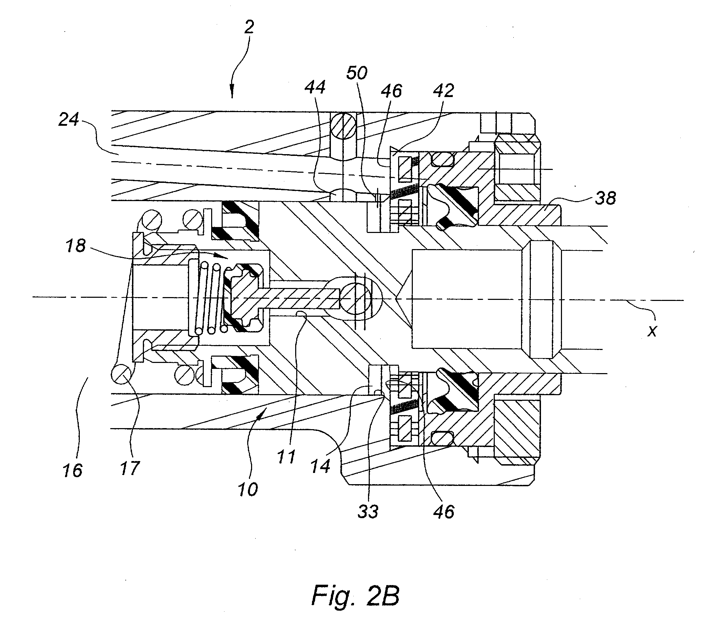

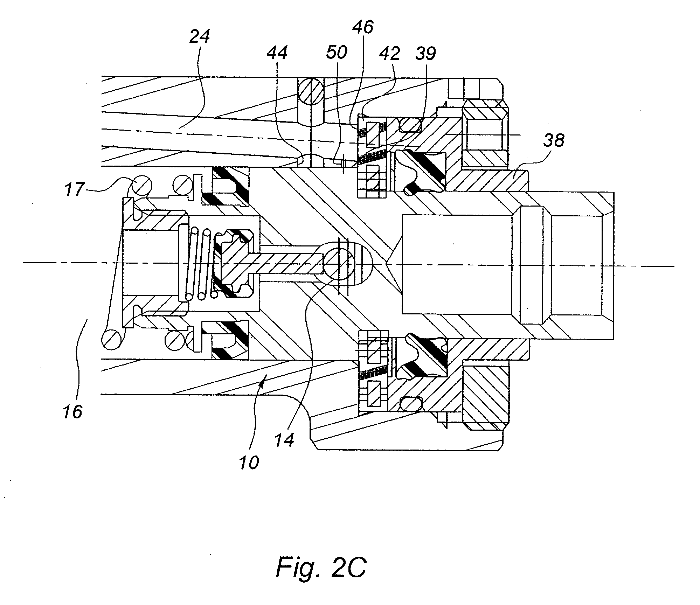

Sur les figures 2A, 2B et 2C on peut voir un premier exemple d'un premier mode de réalisation d'un maître-cylindre selon la présente invention comportant un corps 2 d'axe longitudinal X percé d'un alésage 4 dans lequel est monté à coulissement étanche au moins un piston hydraulique 10 actionné par une tige d'actionnement reliée à une pédale de frein (non représentées). L'étanchéité du coulissement du piston 10 est assurée par exemple par un joint à lèvre 9 monté de manière fixe sur une extrémité avant du piston 10. Le piston 10 divise l'alésage 4 en une chambre d'alimentation 14 alimentée en liquide de frein par un réservoir de liquide de frein (non représenté) par l'intermédiaire d'un canal d'alimentation 24, et en une chambre de travail 16 en communication en fonctionnement normal avec des freins disposés au niveau de roues (non représentés). Le piston 10 comporte vers l'avant une tête de piston 32 et vers l'arrière une queue de piston 34, le guidage en coulissement du piston 10 étant assuré par le guidage de la queue de piston 34 au moyen d'une bague de guidage 38 montée de manière étanche dans le corps du maître-cylindre au moyen par exemple d'un joint torique 45 à l'arrière du maître-cylindre.

Un canal annulaire 33 est formé entre la périphérie extérieure de la queue de piston 34 et le corps du maître-cylindre 2 permettant le passage du liquide de frein entre la chambre d'alimentation 14 et le canal d'alimentation 24.

En position repos le piston hydraulique 10 est en appui au repos contre une bague d'appui 42 formant butée et montée entre la bague de guidage 38 et le corps du maître-cylindre 2.

Le piston comporte dans sa partie centrale un passage 11 mettant en communication au repos la chambre d'alimentation 14 et la chambre de travail 16, et comportant un dispositif à clapet 18 interrompant la communication entre les chambres 14 et 16 lors d'une action de freinage.

Le dispositif à clapet 18 est le même que celui précédemment décrit pour le maître-cylindre de l'état de la technique représenté en figures 1 et 2.

Un moyen élastique de rappel 17 en position repos du piston 10 est montée en compression entre une face avant 19 du piston 10 et une extrémité avant (non représentée) de la chambre de travail 16

Le corps du maître-cylindre comporte également des moyens d'amortissement hydrauliques 48 comportant un canal d'échappement 50 mettant en communication la chambre d'alimentation 14 et le canal d'alimentation 24 et un moyen obturateur 41 d'une seconde extrémité longitudinale arrière 39 du canal d'alimentation 24 opposée à une première extrémité 37 longitudinale raccordée de manière étanche au réservoir de liquide de frein.

Dans l'exemple représenté, le moyen obturateur 41 est formé par une face avant 46 la bague d'appui 42 disposée de manière sensiblement étanche contre le corps du maître-cylindre 10.

Il est bien entendu envisageable de prévoir un moyen obturateur 41 de l'extrémité arrière 39 du canal d'alimentation 24 différent de la bague d'appui et interposé entre la bague d'appui de la tête de piston 32 et le corps du maître-cylindre. Cette remarque est également valable pour tous les modes de réalisation d'un maître-cylindre selon la présente invention.

Le canal d'échappement 50 est pratiqué sensiblement perpendiculaire à l'axe X pratiqué entre la bague d'appui 42 et un canal de ré-alimentation 44, et sensiblement perpendiculaire à l'axe X dans une paroi 52 séparant la chambre d'alimentation 14 du canal d'alimentation 24. Le canal d'échappement 50 est de diamètre faible relativement au diamètre du canal de ré-alimentation 44. La diamètre du canal 50 est avantageusement compris entre 0,1mm et 1mm, et de préférence égal à 0,7mm.

Le diamètre du canal de ré-alimentation 44 est avantageusement compris entre 2mm et 4mm et de préférence égal à 2,5mm.

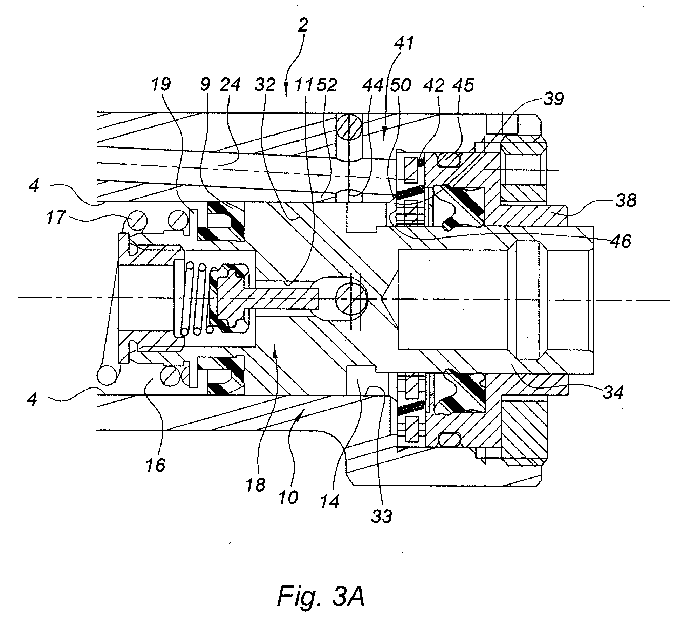

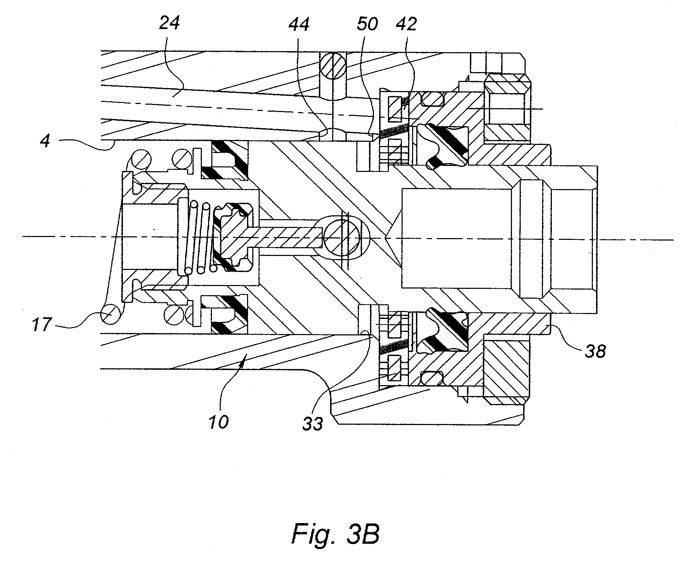

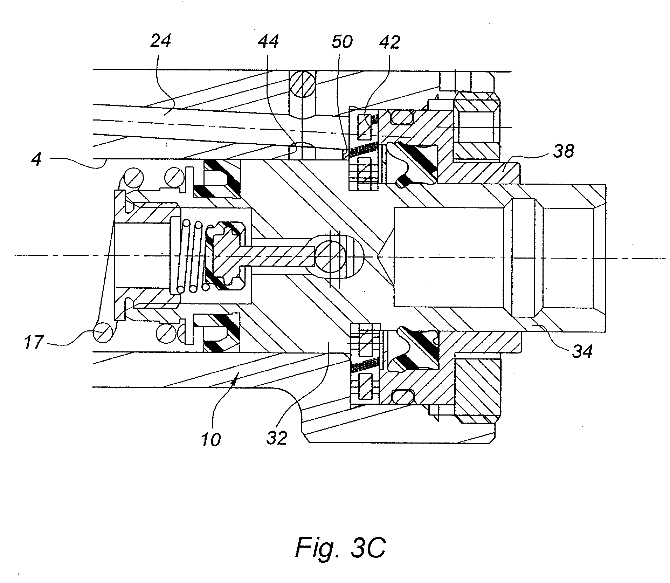

Sur les figures 3a, 3b et 3c on peut voir un détail d'un deuxième exemple du premier mode de réalisation d'un maître-cylindre selon la présente invention dans lequel les moyens d'amortissement hydraulique 48 sont formés par un canal 50 sensiblement perpendiculaire à l'axe X pratiqué entre la bague d'appui 42 et le canal de ré-alimentation 44, et plus particulièrement à l'extrémité longitudinale arrière 39 du canal d'alimentation 24 dans une paroi 52 séparant la chambre d'alimentation 14 du canal d'alimentation 24, la paroi du canal étant formée pour une première partie transversale par le corps 10 du maître-cylindre et pour une seconde partie transversale par la face avant 46 de la bague d'appui 42 et mettant en communication la chambre d'alimentation 14 et le canal d'alimentation 24. Le canal d'échappement 50 est de diamètre faible relativement au diamètre du canal de ré-alimentation 44. La diamètre du canal 50 est avantageusement compris entre 0,1mm et 1mm, et de préférence égal à 0,7mm.

Le diamètre du canal de ré-alimentation 44 est avantageusement compris entre 2mm et 4mm et de préférence égal à 2,5mm.

Nous allons maintenant expliquer le retour du piston 10 en position repos en appui sur la bague d'appui 42 de manière silencieuse pour le premier mode réalisation d'un maître-cylindre selon la présente invention.

Lors d'une phase de défreinage, le conducteur relâche son action sur la pédale de frein et sous l'action du ressort de rappel du piston 10, le piston hydraulique primaire 10 recule en direction de la bague d'appui. Lors du retour du piston hydraulique 10 le liquide de frein contenu dans la chambre d'alimentation est chassé vers le réservoir principalement par le canal annulaire 33 et le canal de ré-alimentation 44 et de manière secondaire par le canal d'échappement 50 (figures 2a et 3a), jusqu'à ce que la périphérie extérieure du piston hydraulique 10 recouvre de manière sensiblement étanche le canal de ré-alimentation 44. (figures 2b et 3b). Le liquide de frein s'écoule alors de la chambre d'alimentation 14 vers le canal d'alimentation 24 par le canal annulaire 33 et le canal d'échappement 50. Du fait du faible diamètre du canal 50, le débit de liquide de frein en direction du canal d'alimentation 24 est très faible et ralentit par conséquent le retour du piston hydraulique 10 vers la bague d'appui et réduit donc le bruit de contact entre le piston hydraulique primaire et la bague d'appui (figures 2c et 3c). Ce canal d'échappement a pour avantage d'être de fabrication simple puisqu'il suffit d'usiner un canal transversal et ne nécessite pas de moyens de fabrication particuliers.

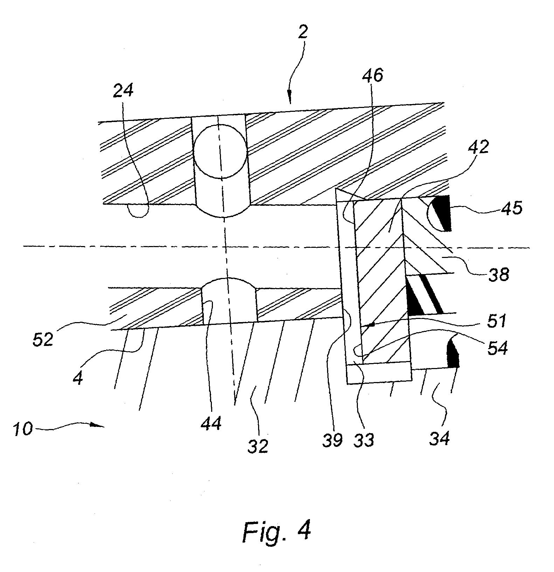

Sur la figure 4, on peut voir une vue de détail d'un second mode de réalisation d'un maître-cylindre selon la présente invention, comportant un corps 2 d'axe longitudinal X percé d'un alésage 4 dans lequel est monté à coulissement étanche au moins un piston hydraulique 10 actionné par une tige d'actionnement reliée à une pédale de frein (non représentées). L'étanchéité du coulissement du piston 10 est assurée par exemple par un joint à lèvre (non représenté) monté de manière fixe sur une extrémité avant du piston 10. Le piston 10 divisant l'alésage 4 en une chambre d'alimentation (non représentée) alimentée en liquide de frein par un réservoir de liquide de frein (non représenté) par l'intermédiaire d'un canal d'alimentation 24, et une chambre de travail d'alimentation (non représentée) en communication en fonctionnement normal avec des freins disposés au niveau de roues (non représentés). Le piston 10 comporte vers l'avant une tête de piston 32 et vers l'arrière une queue de piston 34, le guidage en coulissement du piston 10 étant assuré par le guidage de la queue de piston 34 au moyen d'une bague de guidage 38 montée de manière étanche dans le corps du maître-cylindre au moyen par exemple d'un joint torique 45 à l'arrière du maître-cylindre.

Un canal à volume variable 33 est formé entre la périphérie extérieure de la queue de piston 34 et le corps du maître-cylindre 2 et permettant le passage du liquide de frein entre la chambre d'alimentation et le canal d'alimentation 24.

En position repos le piston hydraulique 10 est en appui au repos contre une bague d'appui 42 formant butée et montée entre la bague de guidage 38 et le corps du maître-cylindre 2.

Le maître-cylindre comporte également des moyens d'amortissement hydrauliques 51 du retour en position repos du piston 10 en appui contre la bague d'appui 42, comportant au moins un canal d'échappement ou une rainure 54 pratiquée sensiblement radialement dans la face 46 de la bague d'appui 42 et un moyen obturateur 41 d'une seconde extrémité longitudinale arrière 39 du canal d'alimentation 24 opposée à une première extrémité 37 raccordée au réservoir de liquide de frein. Il est avantageux de prévoir une bague d'appui comportant une face 46 munie de plusieurs rainures 54 afin de simplifier l'orientation de la bague d'appui lors de son montage dans le corps du maître-cylindre.

Le moyen obturateur 41 est formé par une face avant 46 de la bague d'appui 42 appliquée de manière sensiblement étanche contre l'extrémité longitudinale arrière 39 du canal d'alimentation 24.

Le piston comporte dans sa partie centrale un passage mettant en communication au repos la chambre d'alimentation 14 et la chambre de travail 16, et comportant un dispositif à clapet interrompant la communication entre les chambres 14 et 16 lors d'une action de freinage.

Un moyen élastique de rappel (non représenté) en position repos du piston 10 est montée en compression entre une face avant 19 du piston 10 et une extrémité avant (non représentées) de la chambre de travail.

Le corps du maître-cylindre comporte également un canal de ré-alimentation 44 sensiblement perpendiculaire à l'axe X et susceptible de mettre en communication le canal d'alimentation 24 et la chambre d'alimentation.

Nous allons maintenant expliquer le retour du piston 10 en position repos en appui sur la bague d'appui 42 de manière silencieuse pour le second mode réalisation d'un maître-cylindre selon la présente invention.

Lors d'une phase de défreinage, le conducteur relâche son action sur la pédale de frein et sous l'action du ressort de rappel du piston 10, le piston hydraulique primaire 10 recule en direction de la bague d'appui. Lors du retour du piston hydraulique 10 le liquide de frein contenu dans la chambre d'alimentation est chassé vers le réservoir principalement par le canal annulaire 33 et le canal de ré-alimentation 44 et de manière secondaire par le canal d'échappement 54, jusqu'à ce que la périphérie extérieure du piston hydraulique 10 recouvre de manière sensiblement étanche le canal de ré-alimentation 44. Le liquide de frein s'écoule alors de la chambre d'alimentation vers le canal d'alimentation 24 par le canal annulaire 33 et le canal d'échappement 54. Du fait de la faible taille de la rainure 54, le débit de liquide de frein en direction du canal d'alimentation 24 est très faible et ralentit par conséquent le retour du piston hydraulique 10 vers la bague d'appui 42 et réduit donc le bruit de contact entre le piston hydraulique primaire et la bague d'appui.

La présente invention a pour avantage d'être de fabrication très simple puisqu'il suffit de pratiquer une rainure sur la bague d'appui.

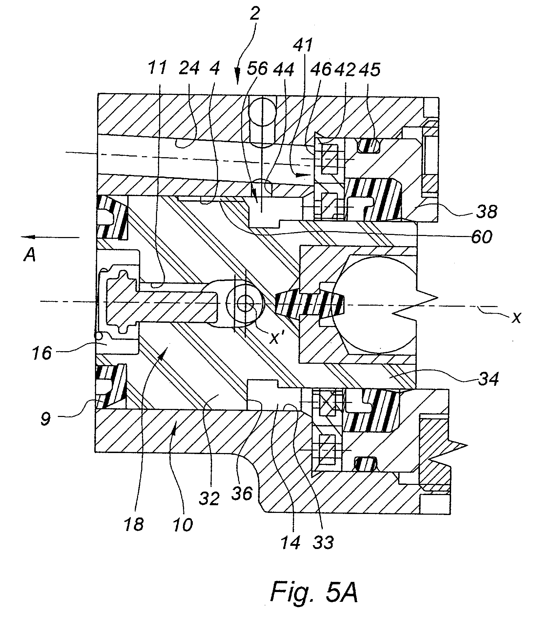

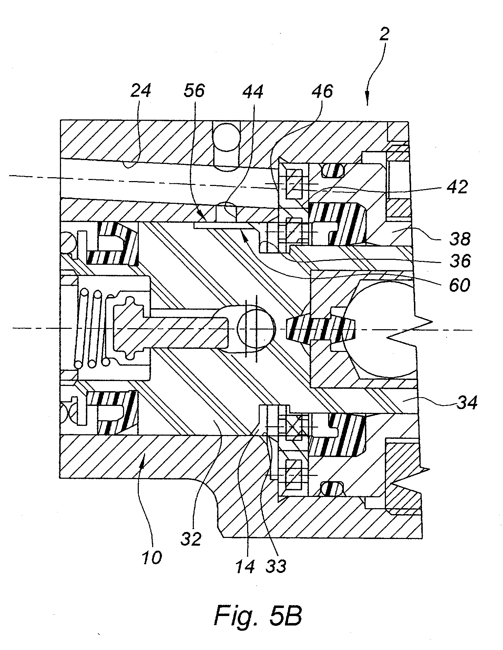

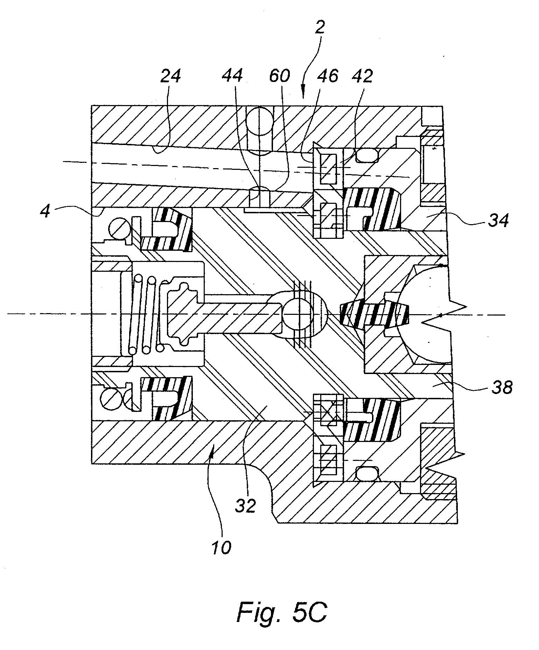

Sur les figures 5A, 5B et 5C on peut voir un premier exemple du second mode et du mode préféré de réalisation d'un maître-cylindre selon la présente invention, comportant un corps 2 d'axe longitudinal X percé d'un alésage 4 dans lequel est monté à coulissement étanche au moins un piston hydraulique 10 actionné par une tige d'actionnement reliée à une pédale de frein (non représentées). L'étanchéité du coulissement du piston 10 est assurée par exemple par un joint à lèvre 9 monté de manière fixe sur une extrémité avant du piston 10. Le piston 10 divisant l'alésage 4 en une chambre d'alimentation 14 alimentée en liquide de frein par un réservoir de liquide de frein (non représenté) par l'intermédiaire d'un canal d'alimentation 24, et une chambre de travail 16 en communication en fonctionnement normal avec des freins disposés au niveau de roues (non représentés). Le piston 10 comporte vers l'avant une tête de piston 32 et vers l'arrière une queue de piston 34 raccordée à la tête de piston 32 par un épaulement 36, le guidage en coulissement du piston 10 étant assuré par le guidage de la queue de piston 34 au moyen d'une bague de guidage 38 montée de manière étanche dans le corps du maître-cylindre au moyen par exemple d'un joint torique 45 à l'arrière du maître-cylindre.

Un canal à volume variable 33 est formé entre la périphérie extérieure de la queue de piston 34 et le corps du maître-cylindre 2 et permettant le passage du liquide de frein entre la chambre d'alimentation 14 et le canal d'alimentation 24.

En position repos le piston hydraulique 10 est en appui au repos contre une bague d'appui 42 formant butée et montée entre la bague de guidage 38 et le corps du maître-cylindre 2.

Le piston comporte dans sa partie centrale un passage 11 mettant en communication au repos la chambre d'alimentation 14 et la chambre de travail 16, et comportant un dispositif à clapet 18 interrompant la communication entre les chambres 14 et 16 lors d'une action de freinage.

Le dispositif à clapet 18 est le même que celui précédemment décrit pour le maître-cylindre de l'état de la technique représenté en figures 1 et 2.

Un moyen élastique de rappel (non représenté) en position repos du piston 10 est montée en compression entre une face avant du piston 10 et une extrémité avant (non représentées) de la chambre de travail 16

Le corps du maître-cylindre comporte également un canal de ré-alimentation 44 sensiblement perpendiculaire à l'axe X et susceptible de mettre en communication le canal d'alimentation 24 et la chambre d'alimentation 14.

Le piston primaire 10 comporte également des moyens d'amortissement hydraulique 56 en fin de course de retour du piston 10 en appui contre la bague d'appui 42 par l'intermédiaire de l'épaulement 36 du piston 10. Les moyens d'amortissement 56 comportent un moyen obturateur 41 d'une extrémité longitudinale arrière 39 du canal d'alimentation 24 et un dégagement 60 pratiqué sur la périphérie de la tête de piston 32.

Le moyen obturateur 41 est formé par une face avant 46 de la bague d'appui 42 appliquée de manière sensiblement étanche par contre l'extrémité longitudinale arrière 39 du canal d'alimentation 24.

Le dégagement 60 s'étend axialement de l'épaulement 36 dans la direction A sur une longueur d au moins égale à la distance séparant la face avant 46 de la bague d'appui 42 du canal de ré-alimentation 44. Dans l'exemple représenté, il s'agit d'un méplat pratiqué sur la périphérie externe du piston et s'étendant longitudinalement de l'extrémité arrière formé par l'épaulement 36 de la tête de piston 32 vers l'extrémité avant du piston. La profondeur p du méplat 61 est avantageusement comprise entre 0,1 et 1mm, et de préférence compris entre 0,2 et 0,3mm.

Lors d'une phase de défreinage, le conducteur relâche son action sur la pédale de frein et sous l'action du ressort de rappel 17 du piston 10, le piston hydraulique primaire 10 recule en direction de la bague d'appui 42. Lors du retour du piston hydraulique 10, tant que l'épaulement 36 est disposé axialement en avant du canal de ré-alimentation 44, plus précisément tant que le canal annulaire 33 est en regard du canal de ré-alimentation 44, le liquide de frein contenu dans la chambre d'alimentation s'écoule à fort débit D vers le réservoir par le canal annulaire 33 et le canal de ré-alimentation 44. Ensuite, lorsque l'épaulement 36 se trouve en arrière du canal de ré-alimentation, l'écoulement du liquide de frein de la chambre d'alimentation vers le canal d'alimentation 24 s'effectue à débit réduit d relativement au débit D par le canal 33 et le méplat, le méplat assurant à l'état repos la communication permanente entre la chambre d'alimentation 14 et le canal de ré-alimentation 44 et ainsi permet la libération complète de la pression dans le circuit de freinage.

Du fait du faible débit d, le retour du piston hydraulique 10 vers la bague d'appui 42 est ralenti et réduit donc le bruit de contact entre le piston hydraulique primaire et la bague d'appui (figures 2c).

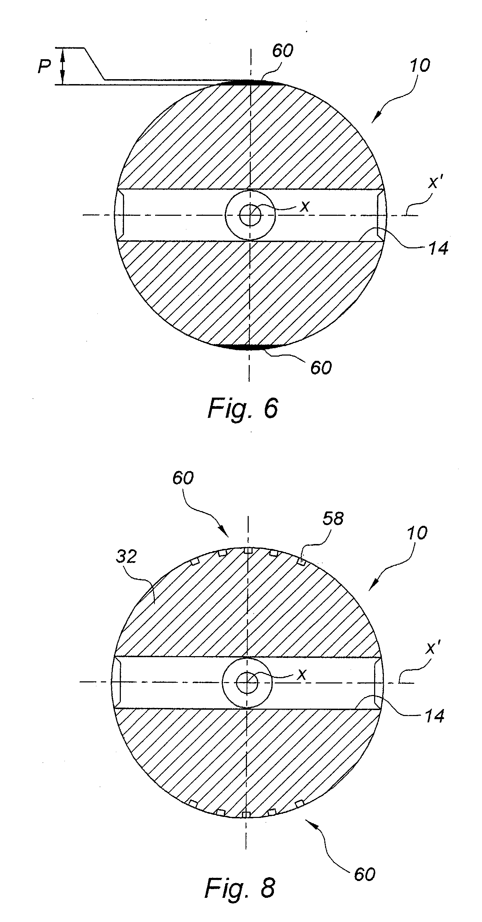

Sur la figure 6, on peut voir une vue en coupe transversale d'un piston 10 selon le mode préféré de réalisation comportant avantageusement deux méplats 60 radialement opposés sur la périphérie du piston 10 pour simplifier le montage pour l'orientation du méplat dans le corps du maître-cylindre.

Il est bien entendu qu'un piston comportant plus de deux méplats fait partie de la présente invention.

Le présent mode de réalisation a pour avantage de ne nécessiter qu'un simple usinage sur le piston primaire.

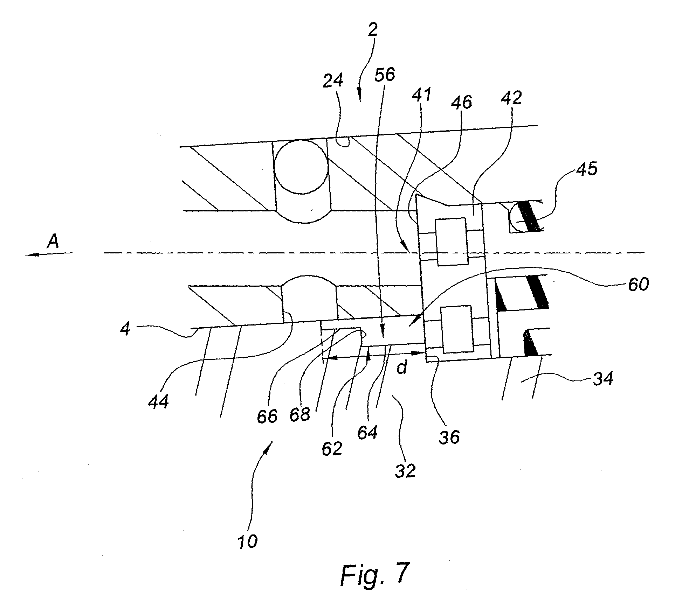

Sur la figure 7, on peut voir un second exemple du mode préféré de réalisation d'un maître-cylindre selon la présente invention comportant un piston primaire 10 muni de moyens d'amortissement hydraulique 56 en fin de course de retour du piston 10 en appui contre la bague d'appui 42 par l'intermédiaire de l'épaulement 36. Les moyens 56 sont formés par un dégagement 60 annulaire étagé pratiqué sur la périphérie externe de la tête de piston 32 du piston 10, comportant vers l'arrière une première partie 64 de plus petit diamètre et une seconde partie 66 de plus grand diamètre raccordé à la première partie par un épaulement 68, le dégagement 62 s'étendant de l'épaulement 36 vers l'avant du piston 10 sur une longueur d au moins égal à la distance séparant la face avant 46 de la bague d'appui 46 du canal de ré-alimentation 44. Le diamètre de la seconde partie de plus grand diamètre 66 est inférieur au diamètre intérieur de l'alésage 4.

Cet exemple de réalisation a pour avantage de ne nécessiter qu'un simple usinage sur le piston primaire et de ne pas nécessiter d'orientation du piston lors du montage de celui-ci dans le corps du maître-cylindre.

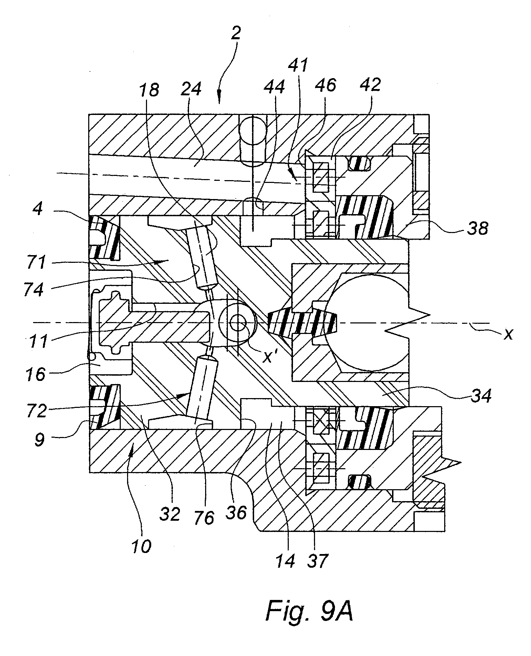

Sur la figure 8, on peut voir une vue en coupe transversale d'un piston 10 selon un troisième exemple de réalisation du mode préféré de réalisation d'un maître-cylindre selon la présente invention comportant un dégagement 60 formé par au moins un canal longitudinal 58 de faible section pratiquée dans le corps du piston 10 sur la périphérie externe de la tête de piston 32 du piston 10 et s'étendant de l'épaulement 36 vers l'avant du piston 110 sur une longueur d au moins égal à la distance séparant la face avant 46 de la bague d'appui 42 du canal de ré-alimentation 44.

Le passage 58 est pratiqué sensiblement perpendiculairement à l'axe X' de la chambre d'alimentation 14.

Le piston comporte avantageusement plusieurs canaux 58 répartis sensiblement régulièrement de part et d'autre d'un axe perpendiculaire à l'axe X', et encore plus avantageusement deux ensembles de rainures radialement opposées par rapport à l'axe longitudinal du piston 10. Dans l'exemple représenté, le piston comporte deux ensemble de cinq canaux répartis angulairement de manière uniforme sur deux portions angulairement opposées de la périphérie de la tête de piston 32.

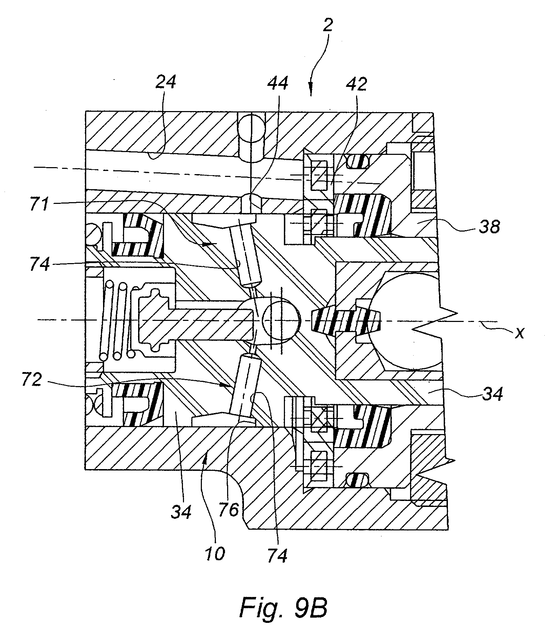

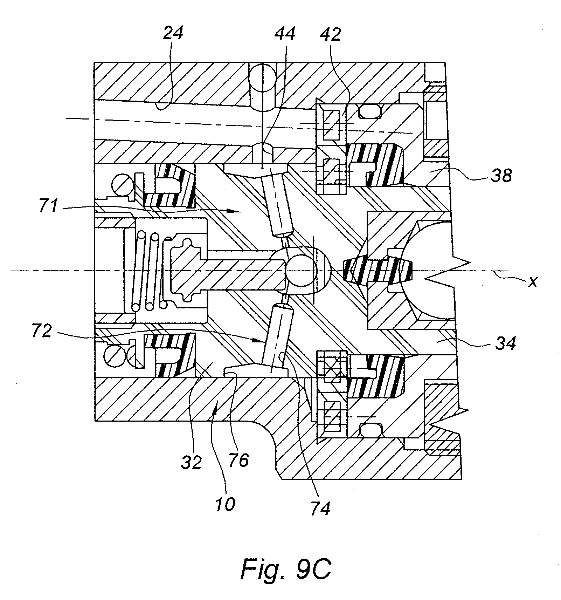

Sur les figures 9A, 9B et 9C, on peut voir un quatrième de réalisation d'un maître-cylindre selon la présente invention, comportant un corps 2 d'axe longitudinal X percé d'un alésage 4 dans lequel est monté à coulissement étanche au moins un piston hydraulique 10 actionné par une tige d'actionnement reliée à une pédale de frein (non représentées). L'étanchéité du coulissement du piston 10 est assurée par exemple par un joint à lèvre 9 monté de manière fixe sur une extrémité avant du piston 10. Le piston 10 divisant l'alésage 4 en une chambre d'alimentation 14 alimentée en liquide de frein par un réservoir de liquide de frein (non représenté) par l'intermédiaire d'un canal d'alimentation 24, et une chambre de travail 16) en communication en fonctionnement normal avec des freins disposés au niveau de roues (non représentés). Le piston 10 comporte vers l'avant une tête de piston 32 et vers l'arrière une queue de piston 34, le guidage en coulissement du piston 10 étant assuré par le guidage de la queue de piston 34 au moyen d'une bague de guidage 38 montée de manière étanche dans le corps du maître-cylindre au moyen par exemple d'un joint torique 45 à l'arrière du maître-cylindre.

Un canal à volume variable 33 est formé entre la périphérie extérieure de la queue de piston 34 et le corps du maître-cylindre 2 et permettant le passage du liquide de frein entre la chambre d'alimentation 14 et le canal d'alimentation 24.

En position repos, le piston hydraulique 10 est en appui au repos contre une bague d'appui 42 formant butée et montée entre la bague de guidage 38 et le corps du maître-cylindre 2.

Le piston comporte dans sa partie centrale un passage 11 d'axe X mettant en communication au repos la chambre d'alimentation 14 et la chambre de travail 16, et comportant un dispositif à clapet 18 interrompant la communication entre les chambres 14 et 16 lors d'une action de freinage.

Le dispositif à clapet 18 est le même que celui précédemment décrit pour le maître-cylindre de l'état de la technique représenté en figures 1 et 2.

Un moyen élastique de rappel (non représenté) en position repos du piston 10 est montée en compression entre une face avant du piston 10 et une extrémité avant (non représentées) de la chambre de travail 16

Le corps du maître-cylindre comporte également un canal de ré-alimentation 44 sensiblement perpendiculaire à l'axe X et susceptible de mettre en communication le canal d'alimentation 24 et la chambre d'alimentation 14.

Le piston primaire 10 comporte également des moyens d'amortissement hydraulique 71 comportant un moyen obturateur 41 d'une seconde extrémité longitudinale arrière 39 du canal d'alimentation 24 et au moins un passage 72 destiné à permettre l'écoulement du liquide de frein à débit réduit relativement à l'écoulement par le canal 33 ménagé entre périphérie de la queue de piston 34 et le corps du maître-cylindre, de la chambre d'alimentation 14 vers le canal d'alimentation 24.

Le moyen obturateur 41 est formé par une face avant 46 de la bague d'appui 42 appliquée de manière sensiblement étanche contre l'extrémité longitudinale arrière 39 du canal d'alimentation 24.

Le passage 72 est formé par exemple par un alésage 74 pratiqué sensiblement radialement dans le corps du piston 10 et formant avantageusement un angle avec la perpendiculaire à l'axe X, orienté vers l'avant du piston 10. L'alésage 74 met en communication le passage 11 et la périphérie externe du piston 10, et par conséquent la chambre d'alimentation 14 et le canal d'alimentation 24 par le canal de ré-alimentation 44. L'alésage 74 débouche avantageusement dans une cuvette 76 pratiquée dans la périphérie externe du piston 10.

Le piston comporte avantageusement deux passages 72 radialement opposés permettant de réduire le temps d'orientation du piston 10 lors du montage dans le corps du maître-cylindre. Les cuvettes 76 sont avantageusement formées par une gorge annulaire.

Lors d'une phase de défreinage, le conducteur relâche son action sur la pédale de frein et sous l'action du ressort de rappel du piston 10, le piston hydraulique primaire 10 recule en direction de la bague d'appui. Lors du retour du piston hydraulique 10 le liquide de frein contenu dans la chambre d'alimentation 14 s'écoule avec un débit D vers le réservoir principalement par le canal 33 et le canal de ré-alimentation 44 (figures 9A), jusqu'à ce que la périphérie extérieure du piston hydraulique 10 recouvre de manière sensiblement étanche le canal de ré-alimentation 44. (figures 9B). Le liquide de frein s'écoule alors de la chambre d'alimentation 14 vers le canal d'alimentation 24 par le canal 33, l'alésage 74 et la cuvette 76 à un débit plus faible d relativement au débit D. Par conséquent le retour du piston hydraulique 10 vers la bague d'appui 42 est ralentit et de ce fait le bruit de contact entre le piston hydraulique primaire et la bague d'appui est réduit (figures 9C).

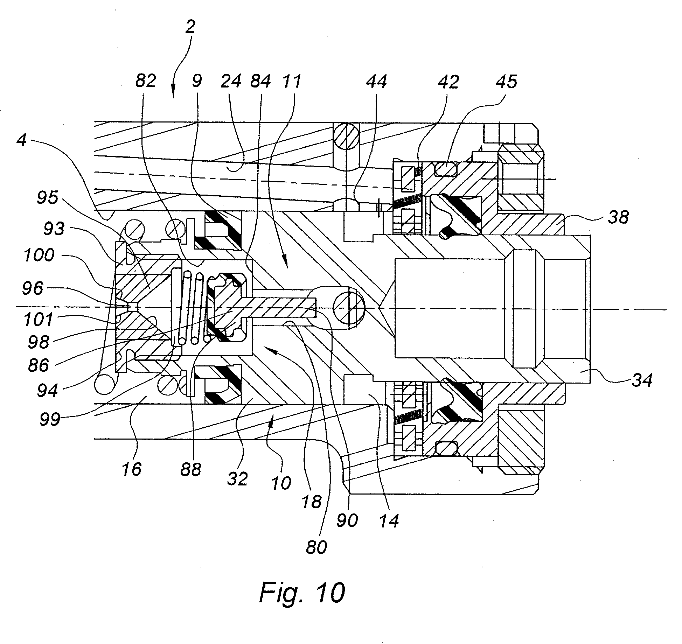

Sur la figure 10, on peut voir un cinquième mode de réalisation d'un maître-cylindre selon la présente invention permettant d'améliorer l'efficacité des premiers moyens d'amortissement hydrauliques tels que représentés aux figures 2 à 9 en cas d'ouverture du clapet séparant la chambre d'alimentation de la chambre de travail lors d'un phase de freinage du fait d'une surpression dans la chambre d'alimentation. L'ouverture du clapet et par conséquent la fuite du liquide de la chambre d'alimentation vers la chambre de travail est susceptible de réduire l'efficacité des premiers moyens d'amortissement hydrauliques selon la présente invention. Par conséquent les premiers moyens d'amortissement hydrauliques sont avantageusement associés à de seconds moyens d'amortissement hydraulique.

Le maître-cylindre selon le cinquième mode de réalisation comporte un corps 2 percé d'un alésage 4 dans lequel est monté à coulissement étanche au moins un piston hydraulique 10 actionné par une tige d'actionnement reliée à une pédale de frein (non représentées). L'étanchéité du coulissement du piston 10 est assurée par exemple par un joint à lèvre 9 monté de manière fixe sur une extrémité avant du piston 10. Le piston 10 divisant l'alésage 4 en une chambre d'alimentation 14 alimentée en liquide de frein par un réservoir de liquide de frein (non représenté) par l'intermédiaire d'un canal d'alimentation 24, et une chambre de travail 16 en communication en fonctionnement normal avec des freins disposés au niveau de roues (non représentés). Le piston 10 comporte vers l'avant une tête de piston 32 et vers l'arrière une queue de piston 34, le guidage en coulissement du piston 10 étant assuré par le guidage de la queue de piston 34 au moyen d'une bague de guidage 38 montée de manière étanche dans le corps du maître-cylindre au moyen par exemple d'un joint torique 45 à l'arrière du maître-cylindre. En position repos le piston hydraulique 10 est en appui au repos contre une bague d'appui 42 formant butée et montée entre la bague de guidage 38 et le corps du maître-cylindre 2.

Le maître-cylindre comporte des premiers moyens d'amortissement hydrauliques tels que représentés figures 2A, 2B et 2C.

Le piston comporte dans sa partie centrale un passage 11 mettant en communication au repos la chambre d'alimentation 14 et la chambre de travail 16, et comportant un dispositif à clapet 18 interrompant la communication entre les chambres 14 et 16 lors d'une action de freinage.

Le passage 11 est formé orientée de la chambre d'alimentation 14 vers la chambre de travail 16 par un premier alésage 80 de plus faible diamètre, un second alésage 82 de plus grand diamètre, le premier alésage 80 étant relié au second alésage 82 par un épaulement 84 formant siège de clapet du dispositif de clapet 18 et coopérant avec un obturateur 86 muni d'une tête 88 disposée dans l'alésage 82 obturant l'alésage 80 et d'une tige de commande d'ouverture 90 du clapet montée à coulissement dans le premier alésage 80. Le dispositif de clapet 18 comporte également un ressort 30 de rappel de l'obturateur en position fermée, le ressort 30étant montée en compression entre la tête 88 et un élément d'appui 94 monté de manière fixe à l'extrémité avant de l'alésage 82, par exemple par vissage et permettant le passage du fluide entre la chambre d'alimentation 14 et la chambre de travail 16.

L'élément d'appui 94 comporte avantageusement les seconds moyens d'amortissement hydraulique 95 formés d'une pièce obturatrice 93 comportant un canal traversant 96 de très faible section relativement à la section transversale de l'alésage 82, ne permettant donc qu'un écoulement à très faible débit.

Le canal traversant est par exemple formé par un premier et un second cônes 98,100 d'axe X reliés par leur sommet formé, le premier cône 98 de plus grande base 99 orientée vers l'arrière et de plus grande hauteur H et le second cône 100 de plus petit base 101 orientée vers l'avant et de plus petite hauteur h, la section de passage du canal 96 étant alors déterminée par l'intersection des cônes 98 et 100.

Il est bien entendu que la pièce obturatrice formant les seconds moyens d'amortissement hydrauliques n'est pas nécessairement porté par l'élément d'appui 94 du moyen de rappel du clapet 18.

On peut également prévoir d'employer un ressort de rappel du l'obturateur de clapet de charge plus élevée par exemple quatre fois plus grande que la charge du ressort utilisé de manière connue, par exemple 8 Newtons afin de réduire les risques d'ouvertures intempestives du clapet.

Ainsi lors du retour du piston en position repos en appui sur la bague d'appui 42, lorsque le dispositif à clapet s'ouvre le liquide de frein contenu dans la chambre d'alimentation 14, dont l'écoulement vers le canal d'alimentation s'effectue à débit réduit par le canal 50, a tendance à vouloir s'écouler vers la chambre de travail 16 par le canal 96, mais du fait de la section réduite du canal 96, l'écoulement du liquide de frein vers la chambre de travail 16 s'effectue également à faible débit et participe au ralentissement en fin de course du piston 10.

Il est bien entendu qu'il est également avantageux d'associer le second moyen d'amortissement hydraulique 95 avec l'un quelconque des premiers moyens d'amortissement selon les premier ou second ou troisième ou quatrième mode de réalisation d'un maître-cylindre selon la présente invention.

Le maître-cylindre selon la présente invention est particulièrement avantageux pour un système de freinage électro-hydraulique cependant il convient parfaitement à un système de freinage classique, pour lequel le liquide de frein sous pression en fonctionnement normal est fourni aux frein disposés au niveau des roues directement par le maître-cylindre et non par une pompe hydraulique.

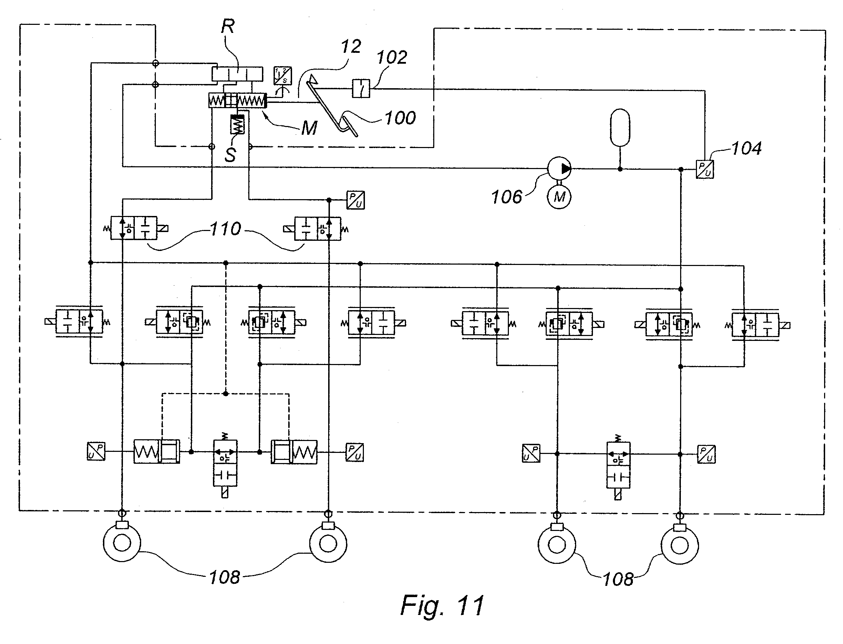

Sur la figure 11, on peut voir un système de freinage électro-hydraulique comportant un maître-cylindre M selon la présente invention comportant des moyens de simulation de la réaction du circuit de freinage, le maître-cylindre est actionné par la tige d'actionnement 12 reliée à une pédale de frein 100 destinée à être déplacée par le conducteur, des moyens de détection 102 du déplacement de la pédale de frein 100 et/ou de la tige d'actionnement 12, par exemple des capteurs de déplacement, un calculateur 104 élaborant un ordre de contrôle à partir des informations fournies par les moyens de détection 102, ledit ordre de contrôle étant transmis à une pompe hydraulique 106 qui aspire le liquide de frein du réservoir R et l'envoie sous pression vers des freins 108 disposés au niveau de roues. Le calculateur 104 commande également des électrovannes 110 interrompant, en fonctionnement normal, la communication entre le maître-cylindre M et les freins 108, ainsi le maître-cylindre sert uniquement à simuler au conducteur une réaction du circuit de freinage. Au repos, c'est-à-dire en dehors d'une phase d'actionnement des freins par une commande du calculateur, les électrovannes 110 sont ouvertes, ainsi en cas de dysfonctionnement du calculateur 104 ou de la pompe 106 par exemple, le maître-cylindre est en communication avec les freins 108 et l'appui par le conducteur sur la pédale de frein 100 commandant le maître-cylindre M au moyen de la tige d'actionnement 12, permet d'envoyer du liquide de frein sous pression aux freins 108 et donc de freiner le véhicule.

On a bien réalisé un maître-cylindre à niveau de bruit de fonctionnement réduit de réalisation simple et de montage rapide.

La présente invention s'applique notamment à l'industrie automobile.

La présente invention s'applique notamment à l'industrie du freinage pour véhicule automobile et notamment à l'industrie du freinage pour voiture particulière.

## Revendications

1. Maître-cylindre comportant un corps d'axe longitudinal (X) percé d'un alésage d'axe (X), au moins un piston (10) monté à coulissement étanche dans un alésage, le piston (10) comportant une tête de piston (32) et une queue de piston (34) raccordée à la tête de piston (32) par un épaulement (36), ladite queue de piston (34) étant guidée par une bague de guidage (38) montée fixe dans le corps de piston, la tête de piston (32) venant au repos en appui contre une bague d'appui (42) par l'intermédiaire de l'épaulement (36), ledit piston (10) délimite une chambre de travail (16) susceptible de contenir un liquide de frein sous pression et en communication avec des freins et une chambre d'alimentation (14) mise en communication au repos avec ladite chambre de travail par un dispositif à clapet 18) disposé dans le corps du piston (10), un canal d'alimentation (24) comportant une première extrémité longitudinale (37) raccordée de manière étanche à un réservoir de liquide de frein et une seconde extrémité longitudinale (39) opposée à la première extrémité (37) en regard de la bague d'appui (42) et permettant l'alimentation en liquide de frein de la chambre d'alimentation (14) par un canal de ré-alimentation (44) et des moyens d'amortissement hydraulique (48) du retour en appui de la tête de piston contre la bague d'appui (42) **caractérisé en ce que** ces moyens d'amortissement hydraulique (48, 51, 56, 71) comportent un moyen obturateur (51) de manière sensiblement étanche de la seconde extrémité longitudinale du canal d'alimentation (24) et au moins un canal d'échappement (50, 54, 58, 60, 72) à débit réduit du liquide de frein de la chambre d'alimentation (14) vers le canal d'alimentation (24).

2. Maître-cylindre selon la revendication 1 **caractérisé en ce que** ledit moyen obturateur (51) est formé par une face (46) de la bague d'appui (42).

3. Maître-cylindre selon la revendication 1 ou 2 **caractérisé en ce que** les moyens d'amortissement (48) comportent un dégagement (60) longitudinal pratiqué sur la périphérie extérieure de la tête de piston (32) et **en ce que** ledit dégagement (60) s'étend sur la périphérie extérieure de la tête de piston (32) à partir de l'épaulement (36) pratiqué sur le piston (10) sur une distance au moins égale à la longueur séparant une face (46) de la bague d'appui (42) susceptible d'être en contact avec le piston (10) et le canal de ré-alimentation (44).

4. Maître-cylindre selon la revendication 3 **caractérisé en ce que** le dégagement (60) est formé par au moins un méplat.

5. Maître-cylindre selon la revendication 4 **caractérisé en ce que** le piston (61) comporte deux méplats radialement opposés.

6. Maître-cylindre selon la revendication 4 ou 5 **caractérisé en ce que** la profondeur du méplat est compris entre 0,1mm et 1mm.

7. Maître-cylindre selon la revendication 3 **caractérisé en ce que** le dégagement (60) est formé par au moins un canal longitudinal (58).

8. Maître-cylindre selon la revendication 7 **caractérisé en ce que** le dégagement (60) est formé de cinq canaux longitudinaux (58) répartis angulairement de manière uniforme sur une portion de la périphérie de la tête de piston (32).

9. Maître-cylindre selon la revendication 8 **caractérisé en ce que** le dégagement (60) est formé de deux ensembles de cinq canaux (58) radialement opposés

10. Maître-cylindre selon la revendication 3 **caractérisé en ce que** le dégagement (60) est formé par une variation (64, 66, 68) du diamètre d'une portion de la tête de piston (32).

11. Maître-cylindre selon la revendication 10 **caractérisé en ce que** le dégagement (60) comporte au moins deux sections (64, 66) de diamètre croissant en direction de l'extrémité de la tête de piston (32) opposée à l'extrémité longitudinale de la tête de piston reliée à la queue de piston (34).

12. Maître-cylindre selon la revendication 1 ou 2 **caractérisé en ce que** les moyens d'amortissement hydraulique (71) comportent un canal sensiblement radial (72) reliant la chambre d'alimentation (14) et la périphérie extérieure de la tête de piston (10), ledit canal (72) débouchant sensiblement en regard du canal de ré-alimentation (44) lorsque que le piston (10) est en appui contre la bague d'appui (42).

13. Maître-cylindre selon la revendication 12 **caractérisé en ce que** le canal (72) débouche dans une cuvette (76) pratiquée sur la périphérie extérieure du piston (10).

14. Maître-cylindre selon la revendication 1 ou 2 **caractérisé en ce que** les moyens d'amortissement (48, 51) comportent un canal d'échappement (50, 54) disposé selon l'axe longitudinal (X) entre la chambre d'alimentation (14) et le canal d'alimentation (24), pratiqué sensiblement perpendiculairement à l'axe du maître-cylindre (X) entre le canal de ré-alimentation (44) et le moyen obturateur (41) et de diamètre sensiblement plus petit que le diamètre du canal de ré-alimentation (44).

15. Maître-cylindre selon la revendication 13 **caractérisé en ce que** le diamètre du canal d'échappement (50) est compris entre 0,1mm et 1mm, et **en ce que** le diamètre du canal de ré-alimentation est compris entre 2mm et 4mm.

16. Maître-cylindre selon la revendication 15 **caractérisé en ce que** ledit canal d'échappement est pratiqué dans le corps du maître-cylindre et dont une partie est formée par l'obturateur (51).

17. Maître-cylindre selon la revendication 15 **caractérisé en ce que** les moyens d'amortissement (51) comportent un canal formé par une rainure radiale (54) pratiquée sur une face (46) de la bague d'appui (42) en contact au repos avec le piston (10) en regard de la seconde extrémité longitudinale (39) du canal d'alimentation (24).

18. Maître-cylindre selon l'une quelconque des revendications précédentes **caractérisé en ce qu'**il comporte des seconds moyens d'amortissement hydrauliques (95) disposés entre la chambre de travail (16) et la chambre d'alimentation (14).

19. Maître-cylindre selon la revendication précédente **caractérisé en ce que** les seconds moyens d'amortissement hydrauliques (95) sont formés d'un pièce obturatrice (93) comportant un canal (96) en regard de l'alésage (82) de communication entre la chambre d'alimentation (14) et la chambre de travail (16), lesdits seconds moyens (95) étant disposés dans la tête de piston (32) en avant du dispositif à clapet (18).

20. Maître-cylindre selon la revendication précédente **caractérisé en ce que** ladite pièce obturatrice (93) forme une pièce d'appui pour un ressort de rappel (92) du clapet (18) de maître-cylindre.

21. Maître-cylindre selon la revendication 19 ou 20 **caractérisé en ce que** le canal (96) est formé par deux cônes relié par leur sommet (98,99) d'axe longitudinale (X).

22. Maître-cylindre selon l'une quelconque des revendications précédentes caractérisé en qu'il est relié en fonctionnement normal à des moyens de simulations de la réaction d'un circuit de freinage, et en fonctionnement dégradé à des freins de roues.

23. Système de freinage comportant un maître-cylindre selon l'une quelconque des revendications précédentes.

24. Système de freinage électro-hydraulique selon la revendication 23 comportant un organe de freinage (100) du type de celui d'une pédale de frein, des moyens de détection (102) du déplacement de ladite pédale de frein, un calculateur (104) élaborant une consigne de contrôle pour une pompe hydraulique (106) délivrant du liquide de frein à au moins un frein (108) disposé au niveau d'une roue du véhicule suite à la détection par les moyens de détection (102) d'une action du conducteur sur l'organe de freinage (100) **caractérisé en ce qu'**il comporte également un maître-cylindre selon la revendication 21.
